# EUROPÄISCHE PATENTSCHRIFT

(11) **EP 1 197 428 B1**
(45) Veröffentlichungstag und Bekanntmachung des Hinweises auf die Patenterteilung: **21.06.2006**
(21) Anmeldenummer: 01810990.0
(22) Anmeldetag: 10.10.2001
(51) Int. Cl.: B62M 1/12

(54) **Fahrrad mit zusätzlichem Vorderradantrieb**
Bicycle with additional front wheel drive
Bicyclette avec transmission additionnelle pour la roue avant

(30) Priorität: 10.10.2000 CH 20102000
(43) Veröffentlichungstag der Anmeldung: 17.04.2002
(73) Patentinhaber: Waldmeier, Robert, 8217 Wilchingen (CH); Waldmeier-Koller, Rita, 8217 Wilchingen (CH)
(72) Erfinder: Waldmeier, Robert, 8217 Wilchingen (CH); Waldmeier-Koller, Rita, 8217 Wilchingen (CH)
(74) Vertreter: Breiter, Heinz

(56) Entgegenhaltungen:
- BE-A- 417 158
- CH-A- 98 468
- CH-A- 173 599
- DE-A- 2 719 846
- DE-A- 2 913 912
- DE-A- 3 234 619
- DE-A- 4 132 794
- US-A- 3 701 543
- US-A- 4 147 370
- US-A- 5 282 640

## Beschreibung

Die Erfindung bezieht sich auf ein Fahrrad mit einem Fussantrieb des Hinterrades und einem an der schwenkbaren Vorderradgabel und dem Gabelrohr befestigten zusätzlichen Handantrieb des Vorderrades gemäss Oberbegriff des Patentanspruchs 1.

Beim Benutzen eines üblichen Fahrrades muss der Fahrer die gesamte Antriebskraft über die beiden Pedalen mit den Tretkurbeln auf das hintere Antriebsrad übertragen, welches über eine Kette Zahnkränze verschiedenen Durchmessers am Hinterrad antreibt. Mit einem zugleich als Kettenspanner wirkenden Übersetzungswechsler können stets optimale Antriebsverhältnisse eingestellt werden. Zur Überwindung von Gegenwind und/oder in Steigungen kann dies trotzdem sehr anstrengend sein, zur Erzeugung eines hinreichenden, links und rechts abwechselnden Beindruckes zieht der Fahrer jeweils kräftig am Lenker.

Unter den Begriff "Fahrrad" fallen auch Trainingsgeräte, bei welchen mit mehr oder weniger starkem Widerstand Steigungen simuliert werden.

Es ist bereits Stand der Technik, die Beinarbeit durch auf das Vorderrad einwirkende und/oder auf das Hinterrad umgelenkte Armarbeit zu ergänzen, sei es durch eine ebenfalls kreisende Bewegung oder durch alternierendes, aber auch gleichzeitiges Ziehen an zwei Teil der Lenkung bildenden Hebeln. Alle Varianten stellen erhöhte Anforderungen an den Radfahrer und an dessen physische Verfassung.

Die DE, A 2719846 offenbart ein Fahrrad gemäß dem Oberbegriff von Anspruch 1 mit einem Fussantrieb des Hinterrads und Handantrieb des Vorderrads, insbesondere für Trimmzwecke, wobei der Handantrieb alleine oder zusätzlich zum Fussantrieb das Fahrrad antreibt. Ein durch Armbetätigung oszillatorisch betätigter Lenker zwingt den Fahrradfahrer in eine aerodynamisch ungünstige Position mit wenig Halt, weshalb eine Momentenwirkung am Vorderrad, die Stellungsstabilität und das Lenken des Fahrrads nicht optimal erfolgen kann. Dieser Fahrradtyp hat sich in der Praxis offensichtlich nicht durchsetzen können.

Die DE, A1 3132019 beschreibt ein Fahrrad mit Fuss- und zusätzlichem Handantrieb, welcher im äusseren seitlichen Bereich des Lenkers angebrachte Antriebshebel aufweist. Damit diese betätigt werden können, ist eine auf dem oberen Rahmenrohr abgestützte Auflage für den Körper des Radfahrers notwendig, so kann er die beiden Antriebshebel im Bereich hinter der Fahrradgabel praktisch senkrecht nach oben ziehen. Über einen Schwinghebel und eine Verbindungsstange wird die Zugkraft auf ein oberes und von dort über eine Kette auf ein unteres Antriebsrad übertragen, welches letztere an der Tretlagerwelle für den Fussantrieb befestigt ist. Ein Freilauf ermöglicht die Abschaltung des Handantriebs. Nach einer Variante können die Antriebshebel in vertikaler Position angeordnet und dort betätigt werden. Dieser Fahrradtyp hat sich offensichtlich in der Praxis ebenfalls nicht durchsetzen können.

Die US,A 5282640 offenbart neben einem Trottinett mit ausschliesslichem Vorderradantrieb ein Fahrrad mit zusätzlichem, auf das Vorderrad einwirkendem Handantrieb. Ein Antriebssystem mit einem etwa senkrecht angeordneten Betätigungshebel übt ein Drehmoment auf ein Kettenzahnrad aus, welches seinerseits über eine Kette das Vorderrad antreibt. Dadurch kann der Fahrradfahrer die Beinkraft durch Armkraft ergänzen. Die Betätigung des Vorderradantriebs erfolgt in weitgehend aufrechter Haltung des Fahrers. Die Handgriffe liegen im Bereich der Gabelachse, was das Lenken erschwert. Wohl wegen dem wenig fahrradähnlichen Aussehen und dem für sportliches Fahren nicht geeigneten Konzept hat sich auch dieses Fahrrad nicht durchsetzen können.

Die Erfinder haben sich die Aufgabe gestellt, ein Fahrrad der eingangs genannten Art zu schaffen, welche einem sportlichen Fahrer auch im Bereich des Leistungssports eine möglichst wirksame Kraftübertragung bietet und eine einfache Anpassung an die jeweiligen körperlichen Gegebenheiten und Bedürfnisse erlaubt. Für den Fahrer soll mit koordinierten, harmonischen Bewegungen eine Leistungssteigerung durch Armkraft möglich sein.

Die Aufgabe wird erfindungsgemäss durch den kennzeichnenden Teil des Patentanspruchs 1 gelöst. Spezielle und weiterbildende Ausführungsformen sind Gegenstand von abhängigen Patentansprüchen.

Das mit den Beinbewegungen koordinierte, beidarmige Ziehen am Betätigungshebel mit Handgriffen weit ausserhalb des Bereichs der Schwenkachse des Vorderrades wird gezielt ein Drehmoment auf das Vorderrad ausgeübt. Ein sportlicher Fahrer mit einem Rennlenker und einem üblichen Zusatzlenkern sehr ähnlichen Betätigungshebel kann seine gewohnte aerodynamische Position auf dem Fahrrad einnehmen. Ein durchtrainierter Athlet, beispielsweise für Triathlon, kann dank seiner Muskelkraft am ganzen Körper und seiner Ausdauer die Leistung dank dem zusätzlichen Armantrieb um 10 bis 20% steigern.

Wie beim Fussantrieb ist ein wesentlicher Punkt die stetige Überwindung von toten Punkten im Antriebssystem. Dank der Kreisbewegung beim Fussantrieb tritt dieses Problem in den Hintergrund. Beim erfindungsgemässen Armantrieb muss eine lineare Bewegung in eine Kreisbewegung umgesetzt werden, wobei sich das Problem des toten Punktes stets ergibt.

Nach einer vorteilhaften Weiterausbildung der Erfindung übt eine Wegführung im unteren und oberen toten Punkt des vorderen Antriebsrades ein beschleunigendes Drehmoment aus. Die dazu notwendige Energie wird im optimalen Bereich des Ziehens am Betätigungshebel mit voller Kraft und beim Absenken des Betätigungshebels mit reduzierter Kraft gespeichert, mit andern Worten im Bereich der halben Höhe der Hebe- und Senkbewegung des Betätigungshebels. Als Wegführung ist beispielsweise ein Zylinder mit gefedert hin- und herführbarem Kolben mit Kolbenstange einsetzbar. Anstelle der Federn kann auch ein anderes deformier- oder komprimierbares Medium eingesetzt werden, beispielsweise ein Schaumstoff oder ein komprimierbares Gas, wie Luft oder dgl.

Neben dem üblichen Einsatz von leichtem Material und aerodynamisch optimalisierten Formen können folgende weitere Faktoren zur individuellen Leistungsoptimierung eingesetzt werden:
- Der Betätigungshebel ist längenverstellbar am Gabelrohr und/oder am Lenker befestigbar.
- Die Pleuelstange ist in variablem Abstand a vom freien Ende des Betätigungshebels befestigbar, zweckmässig ist der Abstand a 10 bis 20 cm, insbesondere etwa 15 cm.
- Die Pleuelstange ist in radialer Richtung einstellbar weit von der Achse des vorderen Antriebsrades entfernt befestigbar.

Mit allen Massnahmen, eine elliptische Gestaltung des vorderen Antriebsrades eingeschlossen, wird eine stufenweise gesteigerte Wirksamkeit der Kraftübertragung des Fahrers erreicht. Dies gilt sowohl für neue als auch für nachgerüstete Fahrräder.

Die Erfindung wird anhand der in der Zeichnung dargestellten Ausführungsbeispiele, welche auch Gegenstand von abhängigen Patentansprüchen sind, näher erläutert. Es zeigen schematisch:
- Fig. 1 eine teilweise Seitenansicht eines Fahrrades,
- Fig. 2 eine teilweise perspektivische Ansicht eines Fahrrades,
- Fig. 3 eine Stirnansicht eines Fahrrades,
- Fig. 4 einen Ausschnitt aus Fig. 1 mit Wegführung,
- Fig. 5 eine Teilansicht der wesentlichen Teile des Fahrrads,
- Fig. 6 eine perspektivische Ansicht eines Betätigungshebels,
- Fig. 7 eine perspektivische Ansicht eines Lagers für den Betätigungshebel,
- Fig. 8 eine perspektivische Ansicht eines sternförmigen Trägers eines vorderen Antriebsrades,
- Fig. 9 eine perspektivische Ansicht eines Schutzblechs, und
- Fig. 10 eine perspektivische Ansicht einer Fahrradgabel mit einem Lager für das vordere Antriebsrad.

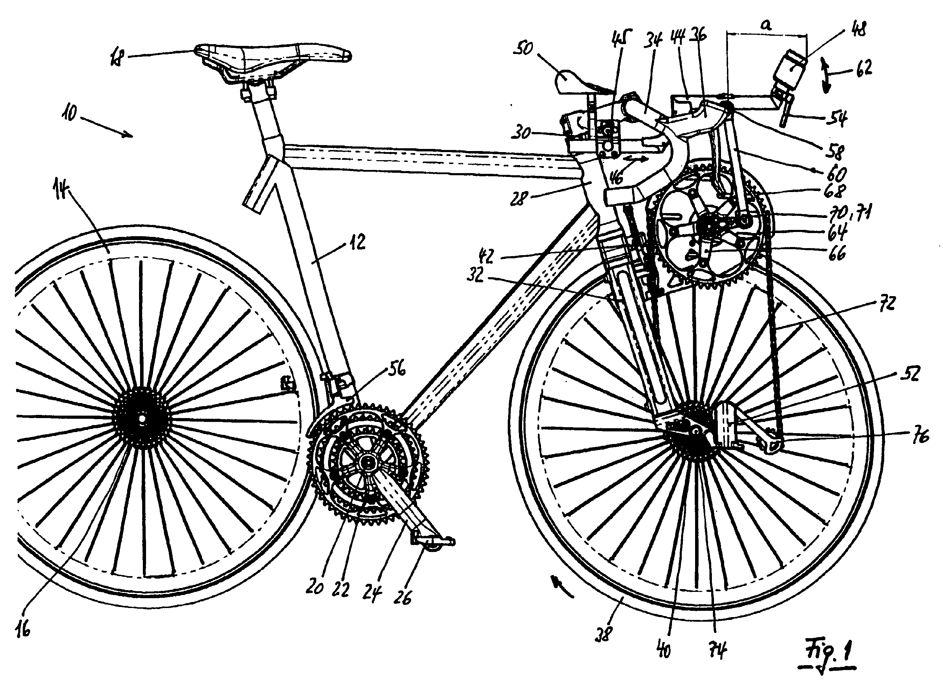

Ein in Fig. 1 dargestelltes Fahrrad 10 für sportliche Zwecke, insbesondere für Triathlon, umfasst im wesentlichen folgende Teile
- einen dreieckförmigen Fahrradrahmen 12
- ein in wenigstens einer nicht dargestellten oder nur angedeuteten Gabel fest montiertes Hinterrad 14 mit mehreren Zahnkränzen 16,
- ein Sattel 18,
- ein Tretlager 20 mit drei Zahnkränzen 22, Tretkurbel 24 und Pedalen 26,
- ein in einem Steigrohr 28 des Fahrradrahmens 12 schwenkbar geführtes Gabelrohr 30 mit einer Vorderradgabel 32,
- einen sportlichen Lenker 34 mit zwei Handgriffen 36 und einem in der Vorderradgabel 32 eingesetzten Vorderrad 38 mit einer Freilaufnabe 40.

Alle vorstehend genannten Teile sind aus bekannten Ausführungsvarianten von Fahrrädern bekannt. Allgemein übliche Bestandteile von Fahrrädern, wie beispielsweise Schutzbleche und elektrische Beleuchtung, sind weggelassen oder nur angedeutet, wie beispielsweise Teile des Bremssystems.

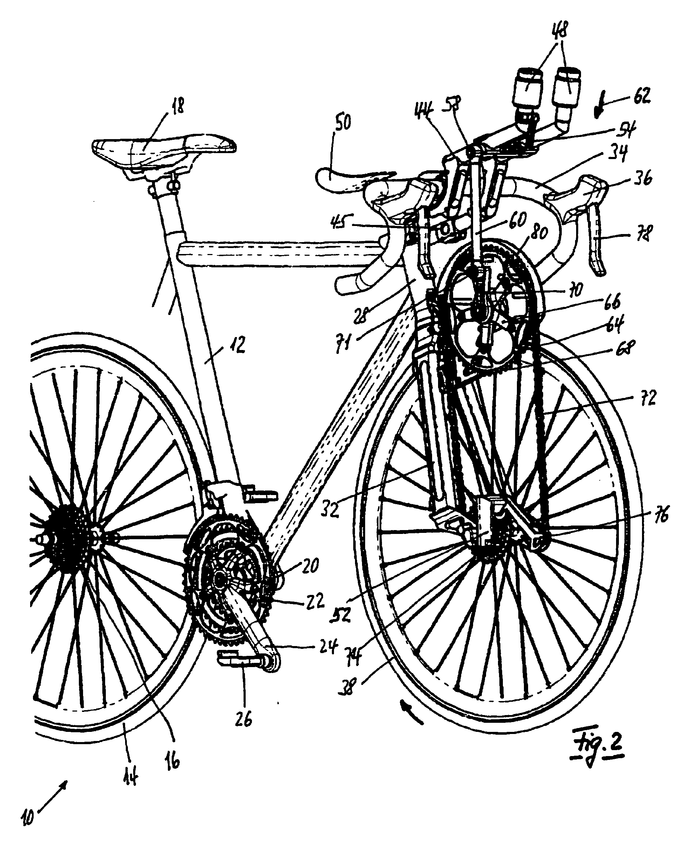

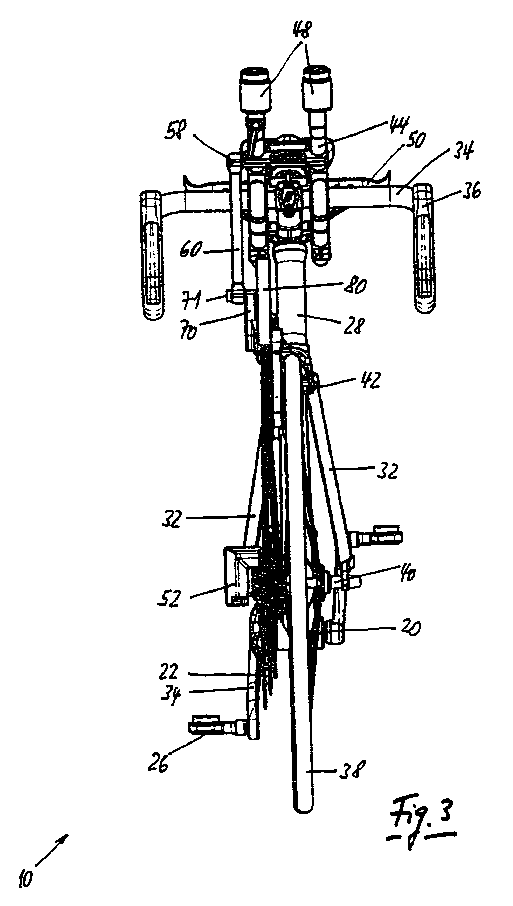

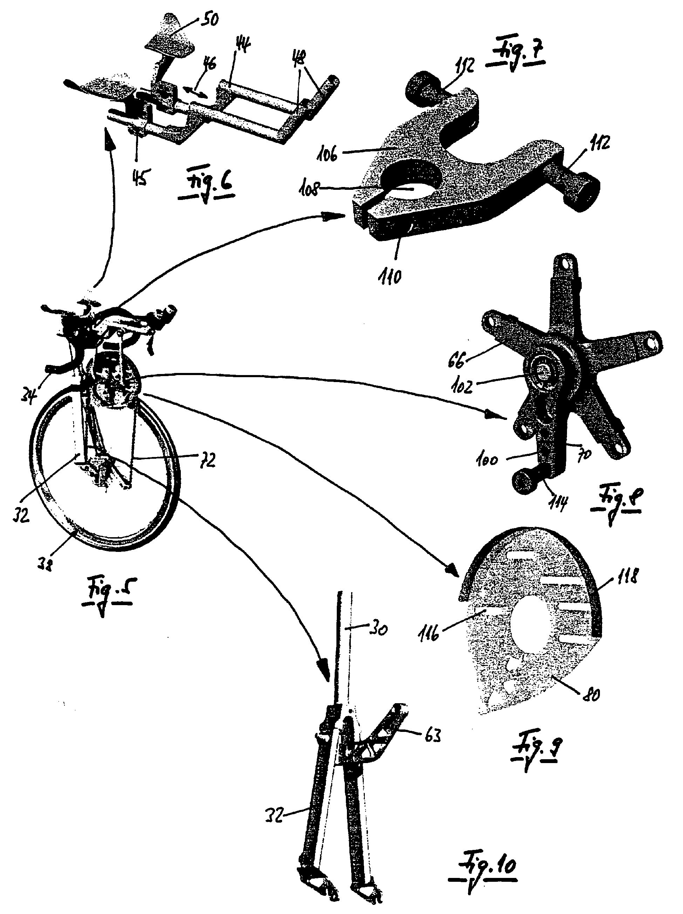

Erfindungsgemäss ist am Gabelrohr 30, unmittelbar unter dem Lenker 34, ein Lager 106 (Fig. 7) für einen Betätigungshebel 44 befestigt, welcher um eine Achse 104 (Fig. 7) schwenkbar und in Richtung des Doppelpfeils 46 längsverschiebbar ist. Der im wesentlichen aus zwei parallelen Rohren ausgebildete Betätigungshebel 44 kann auch die Funktion des Lenkers 34 übernehmen, wenn wenigstens eine Hand des Radfahrers einen der beiden Handgriffe 48 umfasst. Die Längeneinstellung des Betätigungshebels 44 in Richtung des Doppelpfeils 46 erfolgt mit Blick auf die Unterarmlänge des Fahrers, welcher mit seinem Ellbogen auf entsprechenden Ellbogenstützen 50 aufliegt. Aus Fig. 3 ist erkennbar, dass die beiden Handgriffe 48 nur wenig, zweckmässig ein Fünftel bis ein Viertel der gesamten Lenkerbreite, auseinander liegen.

Die Handgriffe 48 sind vorzugsweise drehbar, so können z.B. die Übersetzungswechsler 52 des Vorder- und des Hinterrades betätigt werden. Unmittelbar unterhalb des Handgriffs 48 ist ein weiterer Übersetzungshebel 54 erkennbar, welcher im vorliegenden Fall auf den Kettenwechsler 56 der Zahnkränze 22 des Tretlagers 20 einwirkt.

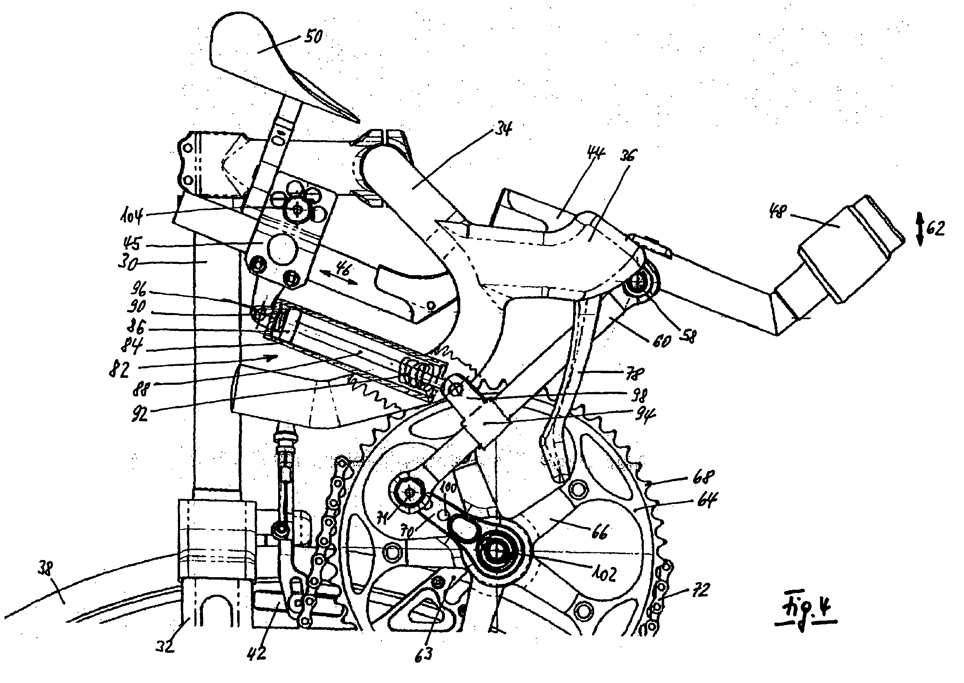

Im Abstand a von vorliegend 144 mm vom freien Ende des Betätigungshebels entfernt ist ein fliegendes Schwenklager 58 für eine Pleuelstange 60 befestigt. Der Abstand a ist ebenfalls einstellbar, je nach den körperlichen Verhältnissen und den Zielen des Radfahrers. Je grösser der Abstand a ist, desto weniger Kraft muss für die gleiche Leistung aufgewendet werden, dafür ist bei grösserem Abstand a der Arbeitsweg in Richtung des Doppelpfeils 62 grösser. Der Betätigungshebel 44 ist in Fig. 6 im Detail dargestellt.

Auf einem starr an der Vorderradgabel 32 befestigten Lager 63 (Fig. 10) ist ein vorderes Antriebsrad 64 frei drehbar gelagert. Auf einem sternförmigen Halter 66 ist ein Zahnkranz 68 aufgezogen. An einem mit diesem sternförmigen Halter 66 starr verbundenen Hebel 70 ist die Pleuelstange 60 über eine untere fliegende Schwenkachse 71 gehaltert (vgl. auch Fig. 8).

Über ein endloses flexibles Antriebsorgan, vorliegend in Form einer Kette 72, wird das vom Betätigungshebel 44 erzeugte und der Pleuelstange 60 auf das vordere Antriebsrad 64 übertragene Drehmoment auf Zahnkränze 74 der Freilaufnabe 40 üblicher Bauart des Vorderrades 38 übertragen. Wie bereits erwähnt wird die Kette 72 vom gleichzeitig als Kettenspanner 76 wirkenden Übersetzungswechsler 52 gespannt. Selbstverständlich kann anstelle einer Kette 72 auch ein Keilriemen, Zahnriemen oder ein Band die Funktion des endlos umlaufenden flexiblen Antriebsorgans übernehmen.

Das vordere Antriebsrad 64 kann statt einen einzigen Zahnkranz auch mehrere umfassen, beispielsweise drei wie das Tretlager 20. In diesem Fall ist ebenfalls ein Kettenwechsler (wie 56 beim Tretlager) erforderlich.

Besteigt der Radfahrer das Fahrrad 10 in der gemäss Fig. 1 vorliegenden Position des Betätigungshebels 44, so drückt er diesen vorerst mit verhältnismässig geringer Kraftanwendung nach unten und zieht ihn dann beim ersten Anwenden von Beinkraft als Gegenbewegung kräftig hoch. Bei einem harmonischen Bewegungsablauf macht der Radfahrer für jede Umdrehung des Tretlagers 20 zwei Umdrehungen des vorderen Antriebsrades 64. Selbstverständlich kann auch pro Umdrehung des Tretlagers 20 nur eine Umdrehung des vorderen Antriebsrades 64 gemacht werden, insbesondere bei schnellen Drehbewegungen oder zur Kompensation eines schwächeren Beines. Die Übersetzungsverhältnisse der Zahnkränze 22 des Tretlagers 20 zu den Zahnkränzen 16 des Hinterrades einerseits und der Zahnkränze 68 des vorderen Antriebsrades 64 zu den Zahnkränzen 74 des Vorderrades 38 werden zweckmässig andererseits miteinander koordiniert. Wesentlich für einen effizienten, harmonischen Bewegungsablauf ist, dass die Ausübung einer Tretkraft auf eine Pedale 26 und der Zugkraft auf den Betätigungshebel 44 gleichzeitig erfolgen. Die Freilaufnabe 40 des Vorderrades 38 erlaubt auch eine dauernde Zugkraft am Betätigungshebel 44.

In Fig. 2 sind an den Griffen 36 schwenkbar gelagerte Bremshebel 78 erkennbar. Weiter ist über dem vorderen Antriebsrad ein in Fig. 9 detailliert gezeigtes Schutzblech 80 angeordnet. Selbstverständlich kann dieses auch aus Kunststoff bestehen.

In Fig. 2 ist der Betätigungshebel 44 im oberen Kulminationspunkt dargestellt. Die Pleuelstange 60 und der Hebel 70 befinden sich auf gerader Linie, der sogenannte "tote Punkt" ist erreicht.

Fig. 3 zeigt dieselbe Position des Betätigungshebels 44. Ein die untere fliegende Schwenkachse 71 bildender Bolzen 114 (Fig. 8) ist in der äussersten Position des Hebels 70 gehaltert. Fig. 3 zeigt auch die asymmetrische Anordnung von Pleuelstange 60 und vorderem Antriebsrad 64, entsprechend den Zahnkränzen 22 des Tretlagers 20.

Die Fig. 1 bis 3 zeigen auch eindrücklich, dass die erfindungsgemässe Lösung die übliche Erscheinungsform eines Fahrrades weitestgehend beibehält. Lediglich das vordere Antriebsrad 64 ändert diese geringfügig.

In Fig. 4, einer Vergrösserung des Bereichs des Lenkers 34 von Fig. 1 ist eine Wegführung 82 zur Überwindung des oberen und unteren toten Punktes dargestellt. Ein toter Punkt ist erreicht, wenn die Pleuelstange 60 und der Hebel 70 zur Kraftübertragung von Betätigungshebel 44 auf das vordere Antriebsrad 64 in gerader Linie liegen. In einem Zylinder 84 der Wegführung 82 ist ein Kolben 86 mit Kolbenstange 88 in axialer Richtung geführt. Stirnseitig sind Federn angeordnet, welche je nach Stellung des Kolbens eine Zug- und/oder Druckkraft ausüben können. Die Federn 90, 92 können durch äquivalente Mittel ersetzt sein, beispielsweise eine elastische Masse oder ein komprimierbares Gas.

Die Wegführung 82 ist einends über eine Aufhängelasche 96 schwenkbar mit der Schraub-Klemmverbindung 45 für den Betätigungshebel 44 verbunden. Andernends ist die Kolbenstange 88 ebenfalls schwenkbar mit einer Lasche 98 einer Schelle 94 auf der Pleuelstange 60 gehaltert. Diese Pleuelstange 60 für das vordere Antriebsrad 64 ist in Fig. 4 in optimaler Zugstellung für den Betätigungshebel 44 gezeigt. Im toten Punkt, d.h. Pleuelstange 60 und Hebel 70 liegen auf einer Geraden, stösst die Feder 90 und/oder zieht die Feder 92 die Pleuelstange 60 voreilend über den toten Punkt hinaus. Sobald die Pleuelstange 60 und der Hebel 70 wieder einen andern Winkel als 180° haben, kann die vom Betätigungshebel 44 übertragene Kraft ein Drehmoment auf das vordere Antriebsrad 64 ausüben. Der untere tote Punkt wird äquivalent überwunden.

Nach einer nicht dargestellten Variante kann im Bereich der Schraub-Klemmverbindung 45 ein Gehäuse ausgebildet sein. Durch eine doppelte Lagerung und eine im Gehäuse angebrachte Wegführung kann der tote Punkt von vom nach hinten verschoben werden.

Im übrigen ist aus Fig. 4 erkennbar, dass der starr mit dem sternförmigen Halter 66 verbundene Hebel 70 noch weitere Bohrungen 100 für die untere fliegende Schwenkachse 71 aufweist. Je näher diese bei der Achse 102 des vorderen Antriebsrads 64 liegt, desto grösser ist die aufzubringende Kraft zur Erzielung des gleichen Drehmoments. Aus geometrischen Betrachtungen ist leicht erkennbar, dass in diesem Fall auch der Arbeitsweg 62 verkleinert wird.

Schliesslich ist in Fig. 4 die Schraub-Klemmverbindung 45 für den Betätigungshebel 44 im Detail dargestellt. Dieser bzw. dessen Schraub-Klemmverbindung 45 ist um eine Achse 104 von zwei coaxialen Bolzen 112 (Fig. 7) schwenkbar, welche ihrerseits über ein Lager 106 (Fig. 7) am Gabelrohr 30 festgeklemmt sind..

In Fig. 5 sind erfindungswesentliche Teile der vorliegenden Erfindung, ohne die bereits in Fig. 4 gezeigte Wegführung, im Vorderteil des Fahrrads montiert und auseinandergezogen dargestellt.

Fig. 6 zeigt einen Betätigungshebel 44, im wesentlichen zwei doppelt abgewinkelte, parallel verlaufende Rohre mit Handgriffen 48 an den freien Enden. Die Ellbogenstützen 50 sind an den Schraub-Klemmverbindungen 45 für den Betätigungshebel 44 befestigt, damit sie den Schwenkbewegungen des Lenkers 34 bzw. des Betätigungshebels 44 folgen können.

In Fig. 7 ist ein Lager 106 für den Betätigungshebel 44 (Fig. 1 bis 4) dargestellt. Das Lager 106 hat eine Bohrung 108 für das Gabelrohr 30 (Fig. 1) und eine Schraube 110 zum Fixieren darauf. Zwei koaxiale Bolzen 112 bilden die Schwenkachse 104 des Betätigungshebels 44 (Fig. 4).

In Fig. 8 ist der sternförmige Halter 66 für den Zahnkranz 68 (Fig. 4) des vorderen Antriebsrades 64 gezeigt. Der starr mit diesem sternförmigen Halter 66 verbundene Hebel 70 weist drei Bohrungen 100 für einen Bolzen 114 auf, welcher die untere fliegende Schwenkachse 71 bildet (Fig. 4).

Fig. 9 zeigt ein Schutzblech 80 für das vordere Antriebsrad 64. Es weist mehrere Längsschlitze 116 und eine Überdachung 118 auf.

In Fig. 10 ist die Vorderradgabel 32 mit dem Gabelrohr 30 dargestellt. Im oberen Bereich der Gabel ist das Lager 63 für das vordere Antriebsrad 64 gehaltert.

## Patentansprüche

1. Fahrrad (10) mit einem Fussantrieb des Hinterrades (14) und einem an der schwenkbaren Vorderradgabel (32) und dem Gabelrohr (30) befestigten zusätzlichen Handantrieb des Vorderrades (38), wobei
- an einem Betätigungshebel (44) über eine obere fliegende Schwenkachse (58), in einem einstellbaren Abstand (a) zum vorderen Ende des Betätigungshebels (44), eine Pleuelstange (60) angelenkt ist, welche mit einem an der Vorderradgabel (32) gehalterten vorderen Antriebsrad (64) verbunden ist,
- dieses vordere Antriebsrad (64) über ein endloses flexibles Antriebsorgan drehmomentfest mit einer Freilaufnabe (40) des Vorderrades (38) verbunden ist, und
- der das Vorderrad (38) steuernde Betätigungshebel (44) horizontal nach vorn gerichtet und um eine senkrecht zur Fahrradlängsrichtung horizontal verlaufende Schwenkachse (104) am Gabelrohr (30) und/oder am Lenker (34) des Fahrrades (10) montiert ist,
**dadurch gekennzeichnet, dass**
- an der Schwenkachse (104) um dieselbe schwenkbare Ellbogenstützen (50) angeordnet sind und der Betätigungshebel (44) stufenlos eistellbar montiert ist, wodurch der Abstand (a) zwischen zwei am vorderen Ende des Betätigungshebels (44) angebrachten Handgriffen (48) und den Ellbogenstützen (50) einstellbar ist.

2. Fahrrad (10) nach Anspruch 1, **dadurch gekennzeichnet, dass** eine Wegführung (82) im unteren und oberen toten Punkt des vorderen Antriebsrades (64) ein Drehmoment ausübt.

3. Fahrrad (10) nach Anspruch 2, **dadurch gekennzeichnet, dass** die Wegführung (82) ein an der Pleuelstange (60) und an der Vorderradgabel (32) oder am Gabelrohr (30) schwenkbar gehalterter Zylinder (84) mit zwei beidseits des Kolbens (86) angeordneten komprimierbaren Mitteln, vorzugsweise Federn (90,92) ist.

4. Fahrrad (10) nach Anspruch 3, **dadurch gekennzeichnet, dass** der Zylinder (84) über eine Schraub-Klemmverbindung (45) zusammen mit dem Betätigungshebel (44) mittels eines Lagers (106) am Gabelrohr (30), die Kolbenstange (88) über eine Schelle (94) an der Pleuelstange (60) schwenkbar gehaltert sind.

5. Fahrrad (10) nach einem der Ansprüche 1 bis 4, **dadurch gekennzeichnet, dass** der Betätigungshebel (44) im wesentlichen aus zwei parallel verlaufenden Rohren, mit nahe nebeneinander liegenden Handgriffen (48) am freien Ende, ausgebildet ist.

6. Fahrrad (10) nach einem der Ansprüche 1 bis 5, **dadurch gekennzeichnet, dass** die obere fliegende Schwenkachse (58) der Pleuelstange (60) in Längsrichtung des Betätigungshebels (44) verstellbar ist, vorzugsweise in einem Abstand (a) von 10 bis 20 cm, insbesondere etwa 15 cm, vom freien Ende.

7. Fahrrad (10) nach einem der Ansprüche 1 bis 6, **dadurch gekennzeichnet, dass** das vordere Antriebsrad (64) einen sternförmig angeordnetem Halter (66), wenigstens einen peripheren Zahnkranz (68) und einen in radialer Richtung in variablem Abstand einsetzbaren Bolzen (114) für die untere fliegende Schwenkachse (71) der Pleuelstange (60) umfasst.

8. Fahrrad (10) nach einem der Ansprüche 1 bis 7, **dadurch gekennzeichnet, dass** der äussere Umfang des Antriebsrads (64), insbesondere die Zahnkränze (68), rund oder elliptisch mit auf der Verbindungsebene der Achse (102) des vorderen Antriebsrades (64) und der unteren fliegenden Schwenkachse (71) liegendem langem Durchmesser ausgebildet ist.

9. Fahrrad (10) nach einem der Ansprüche 1 bis 8, **dadurch gekennzeichnet, dass** die Freilaufnabe (40) des Vorderrades (38) mit wenigstens einem Zahnkranz (74) verbunden ist, und das als Kette (72) ausgebildete endlose Transportorgan einen zugleich als Kettenspanner (76) ausgebildeter Übersetzungswechsler (52) aufweist.

10. Fahrrad (10) nach einem der Ansprüche 1 bis 9, **dadurch gekennzeichnet, dass** das vordere Antriebsrad (64) ein Schutzblech (80) mit Kettenüberdachung (118) aufweist.

## Claims

1. Bicycle (10) with a foot drive of the rear wheel (15) and an additional hand drive of the front wheel (38) attached to the swivellable front wheel fork (32) and the fork tube (30), where
- a connecting rod (60) is hinged to a control lever (44) by way of an upper floating swivel axis (58) at an adjustable distance (a) from the front end of the control lever (44) and is connected with a front drive wheel (64) held on the front wheel fork (32),
- this front drive wheel (64) is connected torque-resistantly by way of an endless flexible drive element with a freewheel hub (40) of the front wheel (38), and
- the control lever (44) steering the front wheel (38) is directed horizontally towards the front and is mounted about a horizontal swivel axis (104), running perpendicularly to the longitudinal direction of the bicycle, on the fork tube (30) and/or on the handlebar (34) of the bicycle (10),
**characterised in that** elbow supports (50) are arranged on and swivellable about the swivel axis (104) and the control lever (44) is mounted fully adjustably, whereby distance (a) between two handles (48) attached to the front end of the control lever (44) and the elbow support (50) is adjustable.

2. Bicycle (10) according to claim 1, **characterised in that** a travel guide (82) exerts a torque in the lower and upper dead point of the front drive wheel (64).

3. Bicycle (10) according to claim 2, **characterised in that** the travel guide (82) is a cylinder (84) held swivellably on the connecting rod (60) and on the front wheel fork (32) or on the fork tube (30) with two compressible means, preferably springs (90, 92), arranged on either side of the piston (86).

4. Bicycle (10) according to claim 3, **characterised in that** the cylinder (84) is held swivellably by way of a screw-clamp connection (45) together with the control lever (44) by means of a bracket (106) on the fork tube (30), and the piston rod (88) is held swivellably by way of a clamp (94) on the connecting rod (60).

5. Bicycle (10) according to any of claims 1 to 4, **characterised in that** the control lever (44) is formed in essence from two parallel tubes with handles (48) lying close together on the free end.

6. Bicycle (10) according to any of claims 1 to 5, **characterised in that** the upper floating swivel axis (58) of the connecting rod (60) is adjustable in the longitudinal direction of the control lever (44), preferably at a distance (a) of 10 to 20 cm, in particular around 15 cm, from the free end.

7. Bicycle (10) according to any of claims 1 to 6, **characterised in that** the front drive wheel (64) comprises a star-shaped holder (66), at least one peripheral sprocket wheel (68) and a bolt (114) which can be inserted at a variable distance in the radial direction for the lower floating swivel axis (71) of the connecting rod (60).

8. Bicycle (10) according to any of claims 1 to 7, **characterised in that** the outer periphery of the drive wheel (64), in particular the sprocket wheel (68), is formed round or elliptical with the long diameter lying in the connecting plane of the axis (102) of the front drive wheel (64) and the lower floating swivel axis (71).

9. Bicycle (10) according to any of claims 1 to 8, **characterised in that** the freewheel hub (40) of the front wheel (38) is connected with at least one sprocket wheel (74) and the endless transport element formed as a chain (72) has a gear changer (52) formed simultaneously as a chain tensioner (76).

10. Bicycle (10) according to any of claims 1 to 9, **characterised in that** the front drive wheel (64) has a guard (80) with chain cover (118).

## Revendications

1. Bicyclette (10) comprenant une transmission à pédales à la roue arrière (14) et une transmission additionnelle manuelle (38) à la roue avant, fixée à la fourche pivotante (32) de la roue avant et au tube (30) de fourche, dans laquelle
- une bielle (60), qui est connectée à une roue menante avant (64) supportée sur la fourche (32) de roue avant, est articulée à un levier d'actionnement (44), à une distance réglable (a) de l'extrémité avant du levier d'actionnement (44), au moyen d'un axe de pivotement supérieur (58) en porte à faux,
- cette roue menante avant (64) est connectée, sans pouvoir pivoter par rapport à lui, avec un moyeu (40) à roue libre de la roue avant (38) au moyen d'un organe de transmission flexible sans fin, et
- le levier d'actionnement (44) qui entraîne la roue avant (38) est orienté horizontalement vers l'avant et est monté sur le tube (30) de fourche et/ou sur le guidon (34) de la bicyclette (10), à rotation autour d'un axe de pivotement (104) de tracé horizontal perpendiculaire à la direction longitudinale de la bicyclette,
**caractérisée en ce que**
des supports (50) de coudes pouvant pivoter autour de l'axe de pivotement (104) sont agencés sur celui-ci, et
le levier d'actionnement (44) est monté de façon réglable progressivement, d'une manière telle que la distance (a) entre deux poignées montées sur l'extrémité avant du levier d'actionnement (44) et les supports (50) de coudes est réglable.

2. Bicyclette (10) selon la revendication 1, **caractérisée en ce qu'**un régulateur (82) de trajectoire communique un couple aux points morts inférieur et supérieur de la roue menante avant (64).

3. Bicyclette (10) selon la revendication 2, **caractérisée en ce que** le régulateur (82) de trajectoire est un vérin (84), supporté à pivotement sur la bielle (60) et sur la fourche (32) de roue avant ou sur le tube (30) de fourche, et comprenant deux moyens compressibles, de préférence des ressorts (90, 92) agencés sur les deux côtés du piston (86).

4. Bicyclette (10) selon la revendication 3, **caractérisée en ce que** le vérin (84) est supporté en commun avec le levier d'actionnement (44) sur le tube (30) de fourche au moyen d'un palier (106), à l'aide d'une connexion (45) de blocage à vis, et la tige (88) de piston est supportée à pivotement sur la bielle (60) au moyen d'un collier de serrage (94).

5. Bicyclette (10) selon l'une quelconque des revendications précédentes, **caractérisée en ce que** le levier d'actionnement (44) consiste essentiellement en deux tubes de tracés parallèles, portant à leurs extrémités libres des poignées (48) disposées l'une près de l'autre.

6. Bicyclette (10) selon l'une quelconque des revendications précédentes, **caractérisée en ce que** l'axe de pivotement supérieur (58) en porte à faux de la bielle (60) est réglable dans la direction longitudinale du levier d'actionnement (44), de préférence à une distance (a) de 10 à 20 cm, en particulier de 15 cm, de l'extrémité libre.

7. Bicyclette (10) selon l'une quelconque des revendications précédentes, **caractérisée en ce que** la roue menante avant (64) comprend un support (66) en étoile, au moins une couronne dentée périphérique (68) et un axe (114) réglable à distance variable en direction radiale, pour l'axe de pivotement inférieur (71) en porte à faux de la bielle (60).

8. Bicyclette (10) selon l'une quelconque des revendications précédentes, **caractérisée en ce que** la périphérie externe de la roue menante (64), en particulier les couronnes dentées (68), sont de structure ronde ou elliptique, le grand axe étant dans le plan contenant l'axe (102) de la roue menante avant (64) et l'axe de pivotement inférieur (71) en porte à faux.

9. Bicyclette (10) selon l'une quelconque des revendications précédentes, **caractérisée en ce que** le moyeu (40) à roue libre de la roue avant (38) est connecté à au moins une couronne dentée (74), et **en ce que** l'organe de transmission sans fin en forme de chaîne (72) comporte un changement de vitesse exerçant en outre la fonction de tendeur (76) de chaîne.

10. Bicyclette (10) selon l'une quelconque des revendications précédentes, **caractérisée en ce que** la roue menante avant (64) comporte une tôle de protection (80) à couvre-chaîne (118).
